# EUROPEAN PATENT SPECIFICATION

(11) **EP 2 759 518 B1**
(45) Date of publication and mention of the grant of the patent: **22.05.2019**
(21) Application number: 13152560.2
(22) Date of filing: 24.01.2013
(51) Int. Cl.: C01B 15/037, C11D 3/39, C11D 3/36, C11D 7/36, D06L 4/12

(54) **Bleaching compositions with improved performance and stability and their use**
Bleichmittel mit verbesserter Leistung und Stabilität und deren Verwendung
Compositions de blanchiment à performances et stabilité améliorées et l'utilisation

(43) Date of publication of application: 30.07.2014
(73) Proprietor: MKS-DEVO Kimyevi Mad. San. Tic. A.S., Istanbul (TR)
(72) Inventor: Sengün, Mehmet Korgün, Istanbul (TR)
(74) Representative: Mutlu, Aydin

(56) References cited:
- EP-A1- 2 554 742
- EP-A2- 0 496 605
- WO-A1-01/79215
- WO-A1-97/06303
- WO-A1-2009/075663

## Description

### Field of the Invention

The present invention relates to a bleaching composition designed for industrial use in treating textile articles. More specifically, the invention is pertaining to compositions with high peroxide content, wherein stability problems related with inorganic stabilizers are eliminated by phosphonic acid derivatives of the present invention.

### Background of the Invention

Among the conventional bleaching agents such as hypochlorites, peroxides, various acids and chlorites, peroxide compounds *inter alia* are becoming the most prominent agents for bleaching purposes in the textile industry because of their high efficiency and environment friendly structure releasing only oxygen and water upon degradation. While peroxide bleaching has considerable advantages over alternative bleaching agents, they still have limitations in storage and use as their stability is prone to diminish by the effect of external and internal conditions such as heat, light, water, alkaline reagents, metals and certain impurities that may cause rapid degradation. Trace amounts of transition metals such as iron and copper promote catalytic decomposition of hydrogen peroxide leading to loss of peroxide from the bleaching solution. This has certain consequences as for example inferior bleaching quality and loss of textile material at the end of the bleaching process. Thereby, the operators are forced to use more chemicals or take certain measures as summarized below.

The bath liquor of a bleaching process is generally added a bleaching agent (i.e. peroxides), an alkaline substance, and further auxiliary chemicals such as wetting agents, oil removers, surfactants, sequestrants and stabilizers. One of the conventional techniques to eliminate the aforementioned problems is generally carried out by dosing of the peroxide and auxiliary agents separately to the bath liquor in order to prevent degradation of the peroxides prior to textile treatment procedure. This technique, however fails to prevent the bleaching agents to get into degradation because the peroxides come into contact with degradation promoting substances before meeting the stabilizers. Correct and timely dosing of the chemicals does not facilitate to solve this problem.

Various attempts have also been made to provide an easily applicable bleaching bath by combining the auxiliary reagents as mentioned above in a single composition. However, combining of peroxides with said auxiliaries did not result in a satisfactory solution for textile treatment because the high concentrations of peroxides (i.e. 25-50% wt) in the industrial scale are tend to drive into degradation with small amounts of impurities.

To alleviate these problems, stabilizers have been focus of those skilled in the art having the objective of combining major ingredients of a bleaching bath into a ready to use composition. GB 1 385 885, for instance proposes aminocarboxylic acids and alkali metal salts thereof as organic sequestrants for stabilizing hydrogen peroxide wherein the amount of hydrogen peroxide is limited to a range between 0.2 and 1.8%. Similarly, US 5 482 516 discloses magnesium salts, particularly a mixture of MgO and citric acid as stabilizing agents.

To provide more effective stabilizers, various phosphate derivatives have also been known in the technical field as for instance disclosed in WO 97/48785, wherein the concentration of the peroxide is limited to a maximum value of 15% wt. These and other references of prior art using of certain stabilizers, although providing effective stabilization and metal ion complexing performance in bleach compositions mainly for household purposes, are not suitable to be used in industrial scale bleaching compositions wherein the peroxide concentrations are rather high, i.e. ranging from 25 to 50% wt.

Another solution for compensation of the loss of activity of peroxides is provided by use of peroxide or peroxide releasable compounds along with a bleach activator that activates the peroxy groups as disclosed for instance in EP 0 667 392. These compositions, however do not ensure satisfactory stability and neither have they solved the aforementioned problems with a cost effective way as they need extra activators.

EP 2 654 742 A1 published on 6.2.2013 discloses a bleaching composition comprising 25 to 50% wt. of hydrogen peroxide, 0.1 to 8.0% wt. of an amino alkyl phosphonate, 0.1 to 3.0% wt. of a metal ion complexing sequestrant, and complementary amount of deionized water EP 0 496 606 A2 discloses hydrogen peroxide compositions comprising a phosphonate derivative having the formula of O-N⁺(CH₂PO₃M₂)₃ for cleaning semiconductor surfaces.

As summarized above, the prior art compositions are mainly aiming at solving the stability problems of peroxides when concentration thereof is generally less than 10%. These compositions are mainly designed for household applications rather than the industrial scale requiring high concentrations of peroxides. On the other hand, the inventors noted that there is a technical prejudice in prior art prescribing use of "inorganic stabilizing agents" such as various metal salts (e.g. alkali metal salts of chlorides, sulfates and nitrates) and various inorganic acids in peroxide based bleaching compositions. The prior art compositions include the aforesaid type of stabilizers particularly with organo-phosphonates in order to improve the bleaching effect. The inventors, however noted that the inorganic stabilizers causes "over stabilization" of hydrogen peroxide particularly in the case that organo-phosphonates are present in the bleaching composition such that hydrogen peroxide would not form the active peranion groups (-OOH) that is useful for the bleaching activity. In that case, usually -OH radicals are formed which is not desired for the bleaching process.

In various attempts, the inventors surprisingly found that the specific organo-phosphonates according to the present invention may successfully replace the conventional inorganic stabilizers; thereby improved stability can be obtained and over stabilization is overcome by inorganic free bleaching compositions. This is crucial because the elimination of the drawbacks above may certainly provide advantages such as low cost, improved stability with minimum loss of hydrogen peroxide and fabric.

It is therefore one of the objects of the present invention to provide an industrial scale -combined- bleaching composition having high concentration of peroxide that remains stable for long storage periods.

A further object of the present invention is to provide a highly concentrated bleaching composition that is suitable to function at lower temperatures as compared to the conventional bleaching compositions.

Another object of the present invention is elimination of the inorganic stabilizers from the combined compositions of hydrogen peroxide bleaching formulations, thereby preventing over stabilization and reducing the costs of the compositions, and in the meantime ensuring improved stability and an efficient bleaching process.

Another object of the present invention is to provide a textile bleaching process involving utilization of the bleaching compositions according to the present invention.

Still a further object of the present invention is to provide a novel textile article that is efficiently bleached according to the present invention.

These and other objectives of the present invention are solved by a combined composition, process and novel textile article as defined in the independent claims.

### Summary of the Invention

The present invention relates to a combined bleaching composition for use in industrial scale bleaching processes wherein the peroxide concentrations exceed the values over 25wt% and particularly over 30wt% up to 60wt%. To provide effective stabilization of such highly concentrated peroxides compositions and at the same time to prevent over stabilization, there is provided a combined formulation of hydrogen peroxide with specific organo-phosphonates, which is free of inorganic stabilizers. Inventors surprisingly noted that modified phosphonates, i.e. N-oxide alkaline salts of phosphonates effectively stabilize the aforementioned peroxide combinations at higher concentrations without needing to further stabilizers and without over stabilization.

The compositions according to the present invention may further comprise other organo-phosphonates, and particularly amino alkyl phosphonic acids such as amino-trimethyl phosphonic acid, hydroxy-ethyl diphosphonic acid (HEDP) and diethylene triamin-penta(methylene phosphonic acid) (DTPMP), which are found to be very effective in combination with the modified organo-phosphonates according to the present invention. The novel combinations of the invention may further comprise auxiliary ingredients such as wetting and surface active agents. According to a further aspect, a process for treating textile articles in a bleaching liquor involving the composition of the present invention is provided. In another aspect, novel textile articles treated with the aforementioned process is disclosed, wherein said textile articles exhibit less deformation and loss of textile material, and also less amount of stains caused by metal salts and inorganic structures in the bath liquor.

### Detailed Description of the Invention

According to the first aspect of the present invention, there is provided an aqueous bleaching composition having combined character along with auxiliary chemicals and having stabilized nature with high resistance to light, water, impurities and metal ions that causes rapid degradation and loss of activity. Peroxide composition of the invention is thereby providing long periods of storage without losing its activity, and an efficient bleaching process with better performance of bleaching activity which also considerably diminishes loss of textile fibers at the end of the overall process.

In textile industry, bleaching compositions having peroxide concentrations of over 25 wt% are classified as industrial scale compositions that need special handling and storage because of higher risk of degradation. According to the first aspect, the bleaching composition of the invention is designed for industrial use with a peroxide content of more than 30 wt%, preferably more than 35 wt%, more preferably between 35 and 50 wt%, and most preferably about 40 wt%. These compositions require various stabilizers because of the high concentration of hydrogen peroxide. Therefore, although various organo-phosphonates have been proposed in prior art for stability purposes, inorganic stabilizers have also been used in combination with the said phosphonates to prevent over stabilization and ensure longer stability profile.

In the context of the present invention, the phrase "inorganic stabilizer" particularly refers to inorganic salts of Si, Mg and Ca as conventionally used for stabilizing peroxides. These may also refer to metal salts such as alkali metal salts of chlorides, sulfates and nitrates as well as silicates having inorganic structures. Most preferably it is intended with this phrase the chelating agents, scavengers, acidifying agents and sequestrants which are purely inorganic in nature.

As mentioned in the background of the invention, inventors have noted that inorganic stabilizers of the above type as conventionally used in highly concentrated hydrogen peroxide solutions of industrial scale mostly suffer of "over stabilization" that considerably slows down the bleaching process as the H₂O₂ moiety hardly proceeds to formation of the useful peranion -OOH. Without wishing to be bound by a theory, the inventors are of the opinion that the conventionally known inorganic stabilizers are very prone to produce -OH moieties rather than the aforesaid peranions when they are poured into an alkaline media. Ignoring to use such stabilizers or reducing their amounts in combined solutions, on the other hand, causes a considerable damage in their long term stability such that peroxide solution rapidly proceeds to degradation.

In accordance with the objects of the current invention, inventors have tried to eliminate the conventional inorganic stabilizers from peroxide compositions, and in this respect unexpectedly noted that the specific organo-phosphonates, i.e. N-oxide metal salts of phosphonates successfully replace those inorganic substances and also eliminate over stabilization problems caused by the said inorganic stabilizers. Therefore, according to a first aspect of the present invention is provided a novel combined composition which is free of inorganic stabilizers, and comprising hydrogen peroxide and N-oxide metal salts of phosphonates according to the current invention as claimed.

According to the aforementioned first aspect, the combined composition of the present invention may further comprise organic stabilizers that are found to be surprisingly effective in keeping the peroxides stable over extended periods of their shelf life. Said stabilizers may be selected from the group of amino alkyl phosphonic acids that may be one or more of the group consisting of amino-trismethyl phosphonic acid, hydroxy-ethyl diphosphonic acid and diethylene triamin-pentaphosphonic acid. These phosphonates may be employed with an amount ranging from 0.1 to 8.0 wt%, and more preferably from 0.1 to 4.0 wt%. Inventors have noted that these amino alkyl phosphonic acids, when used in combination with the organo-phosphonates of the current invention, considerably contributes to long term stability of peroxide compositions while the over stabilization problems are still being suppressed.

The composition of the invention may further comprise surface active agents in order to provide a combined solution that is able to improve wetting performance of the bath liquor. The preferred surfactants of the invention may be any of the anionic or nonionic surfactants known to those skilled in the art, and in a preferred embodiment, they may be selected from the group consisting of alkane sulfonates, C8-C15 alkyl sulfates, C8-C13 fatty alcohols ethoxylated with 3-30 moles of ethylene oxide, and phosphate esters of said alcohols. In a preferred embodiment, total amount of the surfactants within the composition is arranged to be in the range of 0 to 15.0 wt%, more preferably 3 to 14 wt%. In a most preferred embodiment, the composition of the present invention comprises tridecyl alcohol (C13) ethoxylated with 6 moles of ethylene oxide, oxo alcohol (C11-12) ethoxylated with 6 moles of ethylene oxide and alkane sulfonate (C12-C14).

The modified organo-phosphonates in the form of N-oxide metal salts according to the present invention considerably improve the stability profile of the composition besides eliminating over stabilization by way of successfully replacing the conventional inorganic stabilizers. The stabilization effect is attributed to the fact that, while the phosphate groups of these compounds function to eliminate the transition metals such as Fe and Cu from the media, the amine groups do not react with peroxides because oxygen atoms deactivate them and prevent loss of peroxide. These modified organo-phosphonates according to the invention have the following general formula:

**O⁻N⁺(CH₂PO₃M₂)₃**

wherein,
M is a metal, and preferably an alkali metal, most preferably potassium or sodium.

In a preferred embodiment, the compound as identified above is N-oxide potassium salt of amino trimethylene triphosphonic acid.

With the above composition of the present invention, the inventors noted further advantages over prior art in terms of safety and efficiency upon using the above composition in well-known bleaching processes. In more detail, the composition of the invention found to be much safer as compared to the conventional bleaching compositions having high peroxide content which do not involve the phosphonate stabilizers of the invention. These features are assayed and results were noted as explained in the examples.

According to the second aspect, there is provided a novel process for treating textile articles such as fabric yarns and cellulosic fibers. The process involves the use of the composition according to the present invention by impregnating the textile article into a process bath involving the composition as identified above or spraying this composition onto said textile article either with a continuous or batch manner. The composition of the present invention is suitable to be used with conventional bleaching processes such as jigger, dip float, continuous bleaching, winch beck, jetting, overflow, pad batch, pad roll and pad steam.

According to the aforesaid first and second aspects, hydrogen peroxide content of the combined compositions according to the current invention is in the range of 30-60 wt%, more preferably 35-50 wt%, and is most preferably 40 wt%. N-oxide metal salts of phosphonates according to the invention can be present with an amount in the range of 1-6 wt% whereas the surfactants may have a range of 0-15 wt% and more preferably of 3-14 wt%.

Therefore, the present invention provides use of a bleaching composition free of inorganic stabilizers comprising 30 to 60 wt% of hydrogen peroxide, and an N-oxide metal salt of a phosphonic acid compound for bleaching of textile articles, with the proviso that said composition does not include a composition comprising;
- 25 to 50% wt of hydrogen peroxide,
- 0.1 to 8.0% wt of an amino alkyl phosphonate,
- 0.1 to 3.0% wt of a metal ion complexing sequestrant, and
- complementary amount of deionized water, and further comprising a phosphonate derivative having the following general formula: O⁻N⁺(CH₂PO₃M₂)₃ wherein, M is an alkali metal.

Hence, according to an embodiment of the invention the combined composition of the present invention may comprise about 40 wt% of hydrogen peroxide, 2.5 wt% of N-oxide compounds, and balance water. In further embodiments surfactants may be added for instance at an amount of about 5 wt% and balance water, or about 12 wt% and balance water if the process involves a dying step.

According to the third aspect textile articles treated with the composition of the present invention are provided. These textile materials are noted as being perfectly bleached without substantial loss of gravity as opposed to the textile articles treated with conventional peroxide solutions lacking of the phosphonic acid derivatives of the invention. This effect is also illustrated in the following examples.

The examples as given below are mainly illustrative and showing the technical effects of the present invention. They do not limit the scope of the invention to any particular embodiment.

### Examples 1-6

1L samples of bleaching liquors containing the bleaching compositions according comparative Examples 1-5 were provided. Bleaching liquor of Example 6 involves the combined composition according to the present invention with the following ingredients:
- Hydrogen peroxide (50%) : 6.4 g/L
- Surfactant (EO6) : 1 g/L
- N-oxide potassium salt of amino trimethylene triphosphonic acid : 0.15 g/L
- Deionized water: 0.45 g/L.

The aforesaid composition was added water to obtain a 1L sample bath liquor according to Example 6. All liquors of the examples were used in a jet machine at 1/8 flotte ratio and 95°C for 40 min in bleaching of fabric samples. Fabrics used in the procedure were of Single Jersey type (100% cotton; 30/1 knitted). Whiteness of the treated fabrics was determined according to the Hunter Whiteness Scale.

**Table 1. Content of bath liquors and their effects according to Examples 1-6**

| | **Example 1** | **Example 2** | **Example 3** | **Example 4** | **Example 5** | **Example 6** |
|---|---|---|---|---|---|---|
| H₂O₂ (50%) | 8.0 g/L | 8.0 g/L | 8.0 g/L | 8.0 g/L | 8.0 g/L | --- |
| NaOH | 3.0 g/L | 3.0 g/L | 3.0 g/L | 3.0 g/L | 3.0 g/L | 3.0 g/L |
| Surfactant (EO6) | 1.0 g/L | 1.0 g/L | 1.0 g/L | 1.0 g/L | 1.0 g/L | --- |
| HEDP | 0.5 g/L | 0.5 g/L | 0.5 g/L | 1.0 g/L | --- | --- |
| DTPMP | --- | --- | --- | --- | 0.5 g/L | --- |
| MgCl₂ | 0.05 g/L | 0.1 g/L | --- | --- | --- | --- |
| MgSO₄ | --- | --- | 0.05 g/L | 0.05 g/L | 0.05 g/L | --- |
| Combined composition | --- | --- | --- | --- | --- | 8.0 g/L |
| Whiteness | 67 | 62 | 67 | 68 | 67 | 72 |
| DP* | 2125 | 2180 | 2080 | 2111 | 2094 | 2368 |
| Hydrophilicity | <1 | <1 | <1 | <1 | <1 | <1 |
| H₂O₂ (50%) residual in liquor, % | 16 | 22 | 15 | 16 | 18 | 4 |
| Weight Loss of fabric, % | 8.2 | 7.7 | 8.5 | 9.2 | 8.8 | 5.4 |

| | | | | | | |
|---|---|---|---|---|---|---|
| *DP: Degree of Polymerization Raw cotton DP: 2840 | | | | | | |

The bleaching liquor of Example 6 containing the combined composition according to the current invention, though having 20% less hydrogen peroxide (50%), had improved effects as compared to the conventional liquors with known stabilizers. Notably, the compositions having the conventional inorganic substances caused considerable damages to the fabrics as can be seen from their DP and weight loss values. Whiteness of the fabrics of comparative Examples 1-5 was also relatively lower than that of Example 6. More importantly residual hydrogen peroxide as measured at the end of the procedures were much more higher than the residue of Example 6 indicating that hydrogen peroxide of the composition according to the present invention remained stable and were used in a very efficient way throughout the process.

### Example 7 Stability

Bleaching compositions were prepared according to examples 1 and 6 as 1L samples which were stored in plastic bottles for 120 days under room conditions.

The analysis from both bottles showed that the composition of comparative example 1 was able to keep the peroxide at 87% while the composition of example 6 held the peroxide content at 96% as compared to their initial contents in the respective bottles.

### Example 8 Safety

100mL aqueous bleaching compositions having the ingredients according to Examples 1 and 6 were provided.

The compositions were poured onto slices of a sheep spleen. The first piece treated with the composition of comparative Example 1 started rotting after about 30 seconds while the second piece treated with a composition of Example 6 showed rotting within about 90 seconds. After 300 seconds, the first piece completely seemed to be roasted with dark colour while the second sample was still pinky showing that the composition according to the present invention is considerably improved in terms of safety.

## Claims

1. Use of a bleaching composition free of inorganic stabilizers comprising 30 to 60 wt% of hydrogen peroxide, and an N-oxide metal salt of a phosphonic acid compound for bleaching of textile articles,
with the proviso that said composition does not include a composition comprising;
- 25 to 50% wt of hydrogen peroxide,
- 0.1 to 8.0% wt of an amino alkyl phosphonate,
- 0.1 to 3.0% wt of a metal ion complexing sequestrant, and
- complementary amount of deionized water, and further comprising a phosphonate derivative having the following general formula: O⁻N⁺(CH₂PO₃M₂)₃ wherein, M is an alkali metal.

2. The use according to claim 1 wherein the composition comprises a further stabilizer which is an amino alkyl phosphonate.

3. The use according to claim 2 wherein amount of the amino alkyl phosphonate ranges from 0.1 to 8.0 wt%.

4. The use according to claim 2 wherein the amino alkyl phosphonate is selected from the group consisting of amino-trismethyl phosphonic acid, hydroxy-ethyl diphosphonic acid and diethylene triamin-pentaphosphonic acid.

5. The use according to claim 1 wherein N-oxide metal salt of the phosphonic acid compound has the following general formula::
**O⁻N⁺(CH₂PO₃M₂)₃**
wherein, M is a metal.

6. The use according to claim 5 wherein said N-oxide metal salt-phosphonic acid compound is present in an amount ranging from 1 to 6 wt%.

7. The use according to claim 5 wherein M is potassium or sodium.

8. The use according to claim 5 wherein the N-oxide metal salt of the phosphonic acid compound is N-oxide potassium salt of amino trimethylene triphosphonic acid.

9. The use according to claim 1 wherein the composition further comprises a surface active agent in an amount ranging from 3 to 14.0 wt%.

10. The use according to claim 9 wherein said surface active agent is selected from the group consisting of alkane sulfonates, C8-C15 alkyl sulfates, C8-C13 fatty alcohols ethoxylated with 3-30 moles of ethylene oxide, and phosphate esters of said alcohols.

11. A bleaching composition free of inorganic stabilizers comprising;
- about 40 wt% of hydrogen peroxide,
- 5 to 12 wt% of a surfactant,
- 2.5 wt% of said N-oxide metal salt - phosphonic acid compound, and
- q.s. water.

12. A bleaching composition according to claim 11 wherein N-oxide metal salt of the phosphonic acid compound has the following general formula:
**O⁻N⁺(CH₂PO₃M₂)₃**
wherein, M is a metal.

## Patentansprüche

1. Verwendung einer Bleichzusammensetzung, die frei von anorganischen Stabilisatoren ist, mit 30 bis 60 Gew.-% Wasserstoffperoxid und einem N-Oxid-Metall-Salz einer Phosphonsäureverbindung zum Bleichen von Textilgegenständen,
unter dem Vorbehalt, dass die Zusammensetzung keine Zusammensetzung beinhaltet mit;
- 20 bis 50 Gew.-% Wasserstoffperoxid,
- 0,1 bis 8,0 Gew.-% eines Amino-Alkyl-Phosphonats,
- 0,1 bis 3,0 Gew.-% eines Metall-Ion-Komplexbildungs-Sequestiermittels und
- einer komplementären Menge an entionisiertem Wasser, und ferner mit einem Phosphonat-Derivat mit folgender allgemeinen Formel: O⁻N⁺(CH₂PO₃M₂)₃, wobei M ein Alkalimetall ist.

2. Die Verwendung gemäß Anspruch 1, bei der die Zusammensetzung einen weiteren Stabilisator aufweist, der ein Amino-Alkyl-Phosphonat ist.

3. Die Verwendung gemäß Anspruch 2, bei der eine Menge des Amino-Alkyl-Phosphonats zwischen 0,1 und 8,0 Gew.-% variiert.

4. Die Verwendung gemäß Anspruch 2, bei der das Amino-Alkyl-Phosphonat aus der Gruppe ausgewählt ist, die besteht aus Amino-Trismethyl-Phosphonsäure, Hydroxy-Ethyl-Diphosphonsäure und Diethylen-Triamin-Pentaphosphonsäure.

5. Die Verwendung gemäß Anspruch 1, bei der das N-Oxid-Metall-Salz der Phosphonsäure folgende allgemeine Formel aufweist:
**O⁻N⁺(CH₂PO₃M₂)₃**
wobei M ein Metall ist.

6. Die Verwendung gemäß Anspruch 5, bei der die N-Oxid-Metall-Salz-Phosphonsäure-Verbindung in einer Menge vorliegt, die zwischen 1 und 6 Gew.-% variiert.

7. Die Verwendung gemäß Anspruch 5, bei der M Kalium oder Natrium ist.

8. Die Verwendung gemäß Anspruch 5, bei der das N-Oxid-Metall-Salz der Phosphonsäure-Verbindung N-Oxid-Kaliumsalz von Amino-Trimethylen-Triphosphonsäure ist.

9. Die Verwendung gemäß Anspruch 1, bei der die Zusammensetzung ferner ein oberflächenaktives Mittel in einer Menge aufweist, die zwischen 3 und 14,0 Gew.-% variiert.

10. Die Verwendung gemäß Anspruch 9, bei der das oberflächenaktive Mittel aus der Gruppe ausgewählt ist, die besteht aus Alkan-Sulfonaten, C8-C15-Alkyl-Sulfaten, C8-C13-Fettalkoholen ethoxyliert mit 3-30 Mol Ethylen-Oxid, und Phosphat-Estern der Alkohole.

11. Ein Bleichzusammensetzung, die frei von anorganischen Stabilisatoren ist, mit:
- etwa 40 Gew.-% Wasserstoffperoxid,
- 5 bis 12 Gew.-% eines Tensids,
- 2,5 Gew.-% der N-Oxid-Metall-Salz-Phosphonsäure-Verbindung und
- qu.s. Wasser.

12. Eine Bleichzusammensetzung gemäß Anspruch 11, bei der das N-Oxid-Metall-Salz der Phosphonsäure-Verbindung folgende allgemeine Formel aufweist:
**O⁻N⁺(CH₂PO₃M₂)₃**
wobei M ein Metall ist.

## Revendications

1. Utilisation d'une composition de blanchiment, exempte de stabilisants inorganiques et comprenant de 30 à 60 % en poids de peroxyde d'hydrogène et un N-oxyde-sel de métal d'un composé acide phosphonique, pour le blanchiment d'articles textiles,
sous réserve que ladite composition n'englobe pas une composition comprenant
- de 25 à 50 % en poids de peroxyde d'hydrogène,
- de 0,1 à 8,0 % en poids d'un amino-alkyl-phosphonate,
- de 0,1 à 3,0 % en poids d'un agent séquestrant formant des complexes avec des ions métalliques,
- et la quantité complémentaire d'eau désionisée, et comprenant en outre un dérivé phosphonate de formule générale suivante : O⁻N⁺(CH₂PO₃M₂)₃ dans laquelle M représente un métal alcalin.

2. Utilisation conforme à la revendication 1, dans laquelle la composition comprend un stabilisant supplémentaire qui est un amino-alkyl-phosphonate.

3. Utilisation conforme à la revendication 2, dans laquelle la proportion de l'amino-alkyl-phosphonate vaut de 0,1 à 8,0 % en poids.

4. Utilisation conforme à la revendication 2, dans laquelle l'amino-alkyl-phosphonate est choisi dans l'ensemble constitué par l'acide amino-tris(méthyl-phosphonique), l'acide hydroxy-éthyl-diphosphonique et l'acide diéthylènetriamine-pentaphosphonique.

5. Utilisation conforme à la revendication 1, dans laquelle le N-oxyde-sel de métal de composé acide phosphonique présente la formule générale suivante :
O⁻N⁺(CH₂PO₃M₂)₃
dans laquelle M représente un métal.

6. Utilisation conforme à la revendication 5, dans laquelle le N-oxyde-sel de métal de composé acide phosphonique est présent en une proportion valant de 1 à 6 % en poids.

7. Utilisation conforme à la revendication 5, dans laquelle M représente potassium ou sodium.

8. Utilisation conforme à la revendication 5, dans laquelle le N-oxyde-sel de métal de composé acide phosphonique est le N-oxyde du sel de potassium de l'acide amino-triméthylène-triphosphonique.

9. Utilisation conforme à la revendication 1, dans laquelle la composition comprend en outre un agent tensioactif en une proportion valant de 3 à 14,0 % en poids.

10. Utilisation conforme à la revendication 9, dans laquelle ledit agent tensioactif est choisi dans l'ensemble formé par les alcane-sulfonates, les alkyl-sulfates en C₈-C₁₅, les alcools gras en C₈-C₁₃ éthoxylés avec de 3 à 30 moles d'oxyde d'éthylène, et les esters phosphates de ces alcools.

11. Composition de blanchiment, exempte de stabilisants inorganiques, comprenant :
- à peu près 40 % en poids de peroxyde d'hydrogène,
- de 5 à 12 % en poids d'un tensioactif,
- 2,5 % en poids dudit N-oxyde-sel de métal de composé acide phosphonique,
- et la quantité complémentaire d'eau.

12. Composition conforme à la revendication 11, dans laquelle le N-oxyde-sel de métal de composé acide phosphonique présente la formule générale suivante :
O⁻N⁺(CH₂PO₃M₂)₃
dans laquelle M représente un métal.
